# EUROPÄISCHE PATENTANMELDUNG

(11) **EP 1 322 026 A1**
(43) Veröffentlichungstag der Anmeldung: **25.06.2003**
(21) Anmeldenummer: 01130778.2
(22) Anmeldetag: 22.12.2001
(51) Int. Cl.: H02K 29/08, H02K 11/00, H02K 1/16

(54) **Stator eines Elektromotors**

(71) Anmelder: Grundfos a/s, 8850 Bjerringbro (DK)
(72) Erfinder: Gaarde, Mogens, 8600 Silkeborg (DK)
(74) Vertreter: Hemmer, Arnd (DE)

(57) **Zusammenfassung**

Die Erfindung betrifft einen Stator eines Elektromotors, in welchem ein Doppelsensor (8) angeordnet ist, welcher sowohl zum Erfassen der Position eines zugehörigen Rotors als auch zum Erfassen der Temperatur ausgebildet ist sowie einen Elektromotor mit einem solchen Stator und einen entsprechenden Sensor.

## Beschreibung

Die Erfindung betrifft den Stator eines Elektromotors, einen Elektromotor sowie einen Sensor.

Bei Permanentmagnetmotoren ist üblicherweise ein mit mehreren Permanentmagneten versehener Rotor drehbar innerhalb eines Stators gelagert. Der Stator besteht dabei meist aus einem Statorblechpaket, das im Wesentlichen ringförmig ausgebildet ist, um den darin umlaufenden Rotor aufzunehmen. An der Innenseite des Stators sind nach innen, also zum Rotor bzw. zur Statorachse hin, offene Nuten vorgesehen, in welchen die Statorwicklungen geführt sind.

Für den Betrieb eines solchen, z. B. bürstenlosen Gleichstrommotors, ist es erforderlich, die Statorwicklungen in Abhängigkeit der Rotorstellung anzusteuern, d. h. zu kommutieren. Es ist also stets erforderlich, die aktuelle Rotorstellung zu erfassen, um den Motor in geeigneter Weise ansteuern zu können. Hierzu kann beispielsweise ein Hallsensor statorseitig vorgesehen sein.

Ferner ist es beim Betrieb des Elektromotors beispielsweise zum Antrieb einer Pumpe erforderlich, die auftretenden Temperaturen zu erfassen. So ist es bei Verwendung mit einer Pumpe insbesondere wichtig, die Temperatur des Fluids zu erfassen, um die Motorleistung entsprechend anzupassen. Hierzu ist ein zusätzlicher Temperatursensor erforderlich, wodurch sich die Zahl der Einzelteile einer Pumpe und der damit verbundene Montageaufwand erhöht.

Es ist Aufgabe der Erfindung, einen Stator eines Elektromotors und einen Elektromotor zu schaffen, bei welchen die Anzahl der erforderlichen Einzelteile verringert ist.

Diese Aufgabe wird durch einen Stator mit den im Anspruch 1 angegebenen Merkmalen, durch einen Elektromotor mit den in Anspruch 9 angegebenen Merkmalen sowie einen zugehörigen Sensor mit den in Anspruch 11 angegebenen Merkmalen gelöst. Bevorzugte Ausführungsformen ergeben sich aus den Unteransprüchen.

In dem erfindungsgemäßen Stator eines Elektromotors ist ein Doppelsensor angeordnet, welcher sowohl zum Erfassen der Position eines zugehörigen Rotors als auch zum Erfassen der Temperatur ausgebildet ist. Diese Anordnung hat den Vorteil, dass kein zusätzlicher Temperatursensor in den Elektromotor integriert werden muss. Dadurch verringern sich die Herstellungs- und Montagekosten für den Elektromotor, da nur ein Doppelsensor eingebaut werden muss, welcher gleichzeitig zwei für den Betrieb des Motors wesentliche Parameter erfasst. Ferner kann die Erfassung der Temperatur verbessert werden, weil sie direkt im Inneren des Motors erfolgt. Insbesondere bei einem Spaltrohrmotor in einer Pumpe kann auf diese Weise die Temperatur direkt am Spaltrohr und damit nah am zu fördernden Fluid gemessen werden. So kann die Fluidtemperatur sehr genau erfasst werden.

Bevorzugt beinhaltet der Doppelsensor zum Erfassen der Position des Rotors ein magnetfeldempfindliches Sensorelement. Ein solches Sensorelement ist insbesondere zur Verwendung in einem Permanentmagnetmotor geeignet, da das Magnetfeld der an dem Rotor vorhandenen Permanentmagneten erfasst werden kann.

Weiter bevorzugt ist das magnetfeldempfindliche Sensorelement ein Hallsensor. Über einen solchen Hallsensor können in bekannter Weise Veränderungen des Magnetfeldes und somit der Position eines Rotors mit einem von diesem ausgehenden Magnetfeld bestimmt werden.

Zum Erfassen der Temperatur beinhaltet der Doppelsensor vorzugsweise ein Temperaturmesselement. Das Temperaturmesselement kann in bekannter Weise ausgestaltet und an den zu erfassenden Temperaturbereich angepasst sein.

Zweckmäßigerweise verfügen das magnetfeldempfindliche Sensorelement und das Temperaturmesselement über eine gemeinsame elektrische Masse zum Anschluss des Doppelsensors. Auf diese Weise wird die Zahl der erforderlichen Anschlussleitungen durch Verschalten der beiden Sensorelemente auf ein Minimum reduziert. Bei Verwendung eines Hallsensors als magnetfeldempfindliches Sensorelement sind beispielsweise vier elektrische Anschlussleitungen für den Doppelsensor ausreichend.

Der Doppelsensor ist vorzugsweise in einem Gehäuse gekapselt. Auf diese Weise werden das magnetfeldempfindliche Sensorelement und das Temperaturmesselement vor Umwelteinflüssen, wie Feuchtigkeit und Verschmutzung geschützt. Ferner kann das Gehäuse in seiner Form so ausgebildet sein, dass der Doppelsensor leicht in den Stator integriert und in diesem fixiert werden kann.

Bevorzugt ist der Doppelsensor in einem Kunststoff eingegossen. Auf diese Weise wird ein einfach herzustellendes und den Sensor ausreichend schützendes Gehäuse geschaffen. Das magnetfeldempfindliche Sensorelement und das Temperaturmesselement können auf einer Platine angebracht und verschaltet sein, mit der die Anschlussleitungen über entsprechende Kontakte verbunden sind. Anschließend wird die gesamte Platine in Kunststoff eingegossen, um das Sensorgehäuse auszubilden und die Bauteile im Inneren des Doppelsensors zu schützen.

Vorzugsweise ist der Doppelsensor in einer zur Statorachse hin offenen Nut aufgenommen. Dies ermöglicht eine einfache Montage des Sensors, da dieser vor Montage des Rotors leicht in den Stator eingesetzt werden kann. Zur Erfassung der Rotorposition ist es erforderlich, den Doppelsensor möglichst nah an dem Rotor anzuordnen. Daher wird der Dopppelsensor vorzugsweise im Bereich eines Aufnahmeraumes für den Rotor im Stator angeordnet.

Ein erfindungsgemäßer Elektromotor, in dem ein Stator gemäß der obigen Beschreibung angeordnet ist, ist vorzugsweise ein Permanentmagnetmotor, bei welchem über den Doppelsensor die Rotorposition bestimmt wird.

Ferner ist der Elektromotor vorzugsweise zum Antrieb einer Pumpe, insbesondere einer Heizungspumpe ausgebildet. Bei einer Pumpe kann es notwendig sein, die Temperatur des zu fördernden Fluids zu bestimmen, um die Leistung des Antriebsmotors entsprechend anzupassen. Dies ist vor allem bei Pumpen in der Heizungstechnik, d. h. Heizungs-Umwälzpumpen erforderlich, bei welchen die Fluidtemperatur als Steuergröße für die Pumpensteuerung verwendet wird. Der Doppelsensor ist vorzugsweise in einem Bereich des Stators angeordnet, welcher dem zu fördernden Fluid möglichst nahe kommt, um die Temperatur des zu fördernden Fluids möglichst genau bestimmen zu können. Bei einem Elektromotor zum Antrieb einer Pumpe ist der Motor vorzugsweise als Nassläufer ausgebildet, d. h. der Rotor des Motors bewegt sich innerhalb des zu fördernden Fluids. Der Raum zwischen Rotor und Stator ist somit durch das zu fördernde Fluid gefüllt. Der Doppelsensor wird daher vorzugsweise an einer dem Rotor zugewandten Wandung des Stators angeordent, so dass erzum einen sehr nah am Rotor liegt, um dessen Position zu bestimmen, und zum anderen sehr genau die Temperatur des Fluids zwischen Rotor und Stator erfassen kann. Zu diesem Zweck liegt der Doppelsensor vorzugsweise an einem im Inneren des Stators angeordneten Spaltrohr an, um einen guten Wärmeübergang zu ermöglichen.

Weiterhin wird gemäß der Erfindung ein Sensor für einen Elektromotor und insbesondere zur Verwendung in einer Pumpe geschaffen. Der Sensorwird in der oben beschriebenen Weise in einem Stator oder einem Elektromotor eingesetzt. Der Sensor ist als Doppelsensor ausgebildet, wobei er ein Sensorelement zur Positionserfassung eines Rotors und ein Temperaturmesselement beinhaltet. Das Sensorelement und das Temperaturmesselement sind in ein Gehäuse, vorzugsweise aus Kunststoff intergriert. Ferner sind die beiden Sensor- bzw. Messelemente vorzugsweise derart elektrisch miteinander verschaltet, dass die erforderlichen Anschlussleitungen auf ein Minimum reduziert werden. Auf diese Weise wird ein Doppelsensor geschaffen, welcher die Positionserfassung und die Temperaturmessung durch ein integriertes Bauteil ermöglicht.

Vorzugsweise ist das Sensorelement zur Positionserfassung ein magnetfeldempfindliches Sensorelement und insbesondere ein Hallsensor. Durch ein solches Sensorelement kann die Winkelposition des Rotors aufgrund einer Verlagerung des von dem Rotor ausgehenden Magnetfeldes bestimmt werden. Diese Anordnung eignet sich insbesondere zur Verwendung mit einem Permanentmagnetmotor, wobei die Winkelposition der an dem Rotor angeordneten Permanentmagnete durch das magnetfeldempfindliche Sensorelement erfasst wird.

Nachfolgend wird die Erfindung beispielhaft anhand der beigefügten Figuren beschrieben. In diesen zeigt:

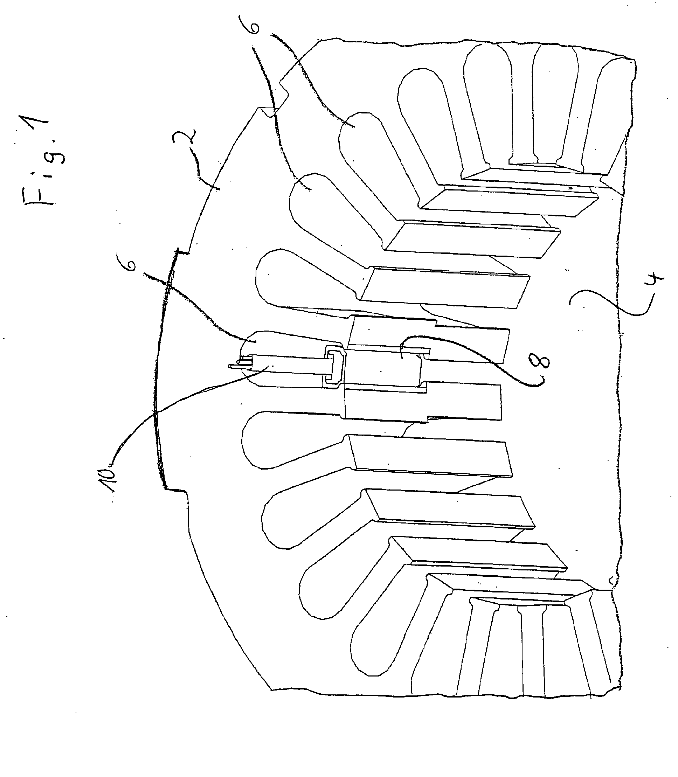

- Fig. 1: eine perspektivische Ausschnittsansicht des erfindungsgemäßen Stators, und
- Fig.2: einen Schaltplan des Doppelsensors.

Der Stator weist einen magnetischen leitenden Tragkörper 2 in Form eines Statorblechpaketes auf, welcher eine zylindrische Außenkontur mit einer zentralen zylindrischen Ausnehmung 4 aufweist. In der zentralen zylindrischen Ausnehmung 4 läuft später der hier nicht gezeigte vorzugsweise mit Permanentmagneten bestückte Rotor. Der Tragkörper 2 weist eine Vielzahl von Nuten 6 auf, welche den Tragkörper 2 über seine gesamte Länge durchziehen. Die Nuten 6 sind zu der zentralen zylindrischen Ausnehmung 4 hin offen ausgebildet und zur Aufnahme von Statorwicklungen (hier nicht gezeigt) vorgesehen. In einer der Nuten 6 ist der Doppelsensor 8 gemäß der Erfindung angeordnet.

Der Doppelsensor 8 beinhaltet ein magnetfeldempfindliches Sensorelement und ein Temperaturmesselement. Damit kann der Doppelsensor 8 zum einen die Position, d. h. die Winkelposition des Rotors in der zylindrischen Ausnehmung 4 bestimmen und zum anderen die Temperatur in seiner Umgebung erfassen. Das magnetfeldempfindliche Sensorelement innerhalb des Doppelsensors 8 ist vorzugsweise ein Hallsensor. Der Doppelsensor 8 ist in eine der Nuten 6 eingebracht, wie in der früheren europäischen Patentanmeldung mit dem Aktenzeichen 01 106 968 offenbart ist.

Der Doppelsensor 8 ist möglichst nahe der zylindrischen Ausnehmung 4 angeordnet. In die zylindrische Ausnehmung 4 wird bei Verwendung in einer Pumpe ein Spaltrohr eingesetzt, um den Innenraum der Ausnehmung 4 gegenüber dem Stator abzudichten. Dabei liegt der Doppelsensor 8 vorzugsweise direkt an dem Spaltrohr, so dass er sicher die Temperatur eines sich im Inneren der Ausnehmung 4 befindenden Fluids erfassen kann. Ferner ist der Doppelsensor 8 in dieser Position auch nahe an dem einzusetzenden Rotor angeordnet, so dass er zuverlässig die Winkelposition des Rotors zu dessen Ansteuerung erfassen kann. Der Doppelsensor 8, der zu diesem Zweck ein magnetfeldempfindliches Sensorelement wie einen Hallsensor beinhaltet, dient somit als Kommutierungssensor des Motors.

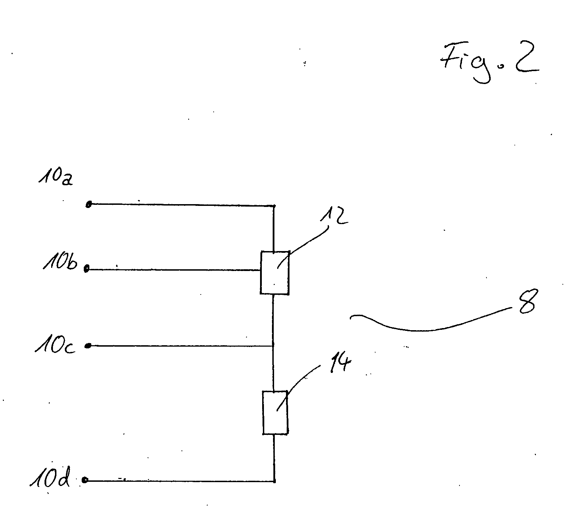

Der Doppelsensor 8 wird über eine Anschlussleitung 10 mit einer Regel- bzw. Steuerungseinrichtung des Motors verbunden. Die elektrische Anschlussleitung 10 beinhaltet vier Leiter 10a bis 10d, wie anhand des Schaltplans in Figur 2 näher erläutert wird. Der Doppelsensor 8 beinhaltet ein magnetfeldempfindliches Sensorelement 12, wie einen Hallsensor und ein Temperaturmesselement 14. Diese beiden Bauteile sind in einem Gehäuse integriert, beispielsweise in Kunststoff eingegossen, so dass sie einen gemeinsamen Doppelsensor bilden. Das magnetfeldempfindliche Sensorelement 12 und das Temperaturmesselement 14 sind so verschaltet, dass vier Leiter 10a - 10d zum Anschluss des Doppelsensors 8 ausreichend sind. Das magnetfeldempfindliche Sensorelement 12 und das Temperaturmesselement 14 sind mit einem als gemeinsame Masse fungierenden Leiter 10c verbunden. Das Temperaturmesselement 14 ist ferner mit einem zweiten Leiter 10d verbunden, welcher als Temperatur-Ausgang des Doppelsensors 8 dient. Das magnetfeldempfindliche Sensorelement 12 weist neben dem als gemeinsame Masse fungierenden Leiter 10c zwei weitere Anschlüsse bzw. Leiter 10a und 10b auf. Der Leiter 10a dient zur Spannungs- bzw. Stromversorgung des magnetfeldempfindlichen Sensorelementes, welches in diesem Fall durch einen Hallsensor gebildet wird. Der Leiter 10b dient als Hall- bzw. Magnetfeld-Ausgang und gibt ein der Rotorposition proportionales Ausgangssignal aus. Die Verschaltung des Sensorelementes 12 und des Temperaturmesselementes 14 erfolgt vorzugsweise auf einer Platine, an der beide Elemente angeordnet sind und mit deren Leiterbahnen die Leiter 10a - 10d der Anschlussleitung 10 verbunden sind. Nachdem der elektrische Anschluss der Sensorelemente 12 und 14 mit den Leitern 10a - 10d erfolgt ist, werden die Sensorelemente 12 und 14 vorzugsweise in Kunststoff eingegossen, um die Sensorelemente vor Umwelteinflüssen zu schützen. Auf diese Weise wird ein Doppelsensor geschaffen, welcher sowohl ein Magnetfeld als auch eine Temperatur erfassen kann.

### BEZUGSZEICHENLISTE

- 2 -: Tragkörper
- 4 -: zylindrische Ausnehmung
- 6 -: Nuten
- 8 -: Doppelsensor
- 10 -: Anschlussleitung
- 10a - 10d -: Leiter
- 12 -: magnetfeldempfindliches Sensorelement
- 14 -: Temperaturmesselement

## Patentansprüche

1. Stator eines Elektromotors, in welchem ein Doppelsensor (8) angeordnet ist, welcher sowohl zum Erfassen der Position eines zugehörigen Rotors als auch zum Erfassen der Temperatur ausgebildet ist.

2. Stator nach Anspruch 1, bei welchem der Doppelsensor (8) zum Erfassen der Position des Rotors ein magnetfeldempfindliches Sensorelement (12) beinhaltet.

3. Stator nach Anspruch 2, bei welchem das magnetfeldempfindliche Sensorelement (12) ein Hallsensor ist.

4. Stator nach einem der vorangehenden Ansprüche, bei welchem der Doppelsensor (8) zum Erfassen der Temperatur ein Temperaturmesselement (14) beinhaltet.

5. Stator nach einem der vorangehenden Ansprüche, bei welchem das magnetfeldempfindliche Sensorelement (12) und das Temperaturmesselement (14) über eine gemeinsame elektrische Masse (10c) zum Anschluss des Doppelsensors (8) verfügen.

6. Stator nach einem der vorangehenden Ansprüche, bei welchem der Doppelsensor (8) in einem Gehäuse gekapselt ist.

7. Stator nach Anspruch 6, bei welchem der Doppelsensor (8) in einen Kunststoff eingegossen ist.

8. Stator nach einem der vorangehenden Ansprüche, bei welchem der Doppelsensor (8) in einer zur Statorachse hin offenen Nut (6) aufgenommen ist.

9. Elektromotor mit einem Stator gemäß einem der vorangehenden Ansprüche, wobei der Elektromotor ein Permanentmagnetmotor ist.

10. Elektromotor nach Anspruch 9, welcher zum Antrieb einer Pumpe ausgebildet ist.

11. Sensor für einen Elektromotor, welcher in der Weise als Doppelsensor ausgebildet ist, dass er ein Sensorelement (12) zur Positionserfassung eines Rotors und ein Temperaturmesselement (14) beinhaltet.

12. Doppelsensor nach Anspruch 11, bei welchem das Sensorelement (12) zur Positionserfassung ein magnetfeldempfindliches Sensorelement und insbesondere ein Hallsensor ist.
